# FASCICULE DE BREVET EUROPEEN

(11) **EP 2 683 966 B1**
(45) Date de publication et mention de la délivrance du brevet: **09.11.2016**
(21) Numéro de dépôt: 12705315.5
(22) Date de dépôt: 10.01.2012
(51) Int. Cl.: F16J 15/02

(54) **JOINT SEMI-ONDULÉ**
SEMIGEWELLTE DICHTUNG
SEMICORRUGATED GASKET

(30) Priorité: 12.01.2011 FR 1150262
(43) Date de publication de la demande: 15.01.2014
(73) Titulaire: Carl Freudenberg KG, 69465 Weinheim (DE)
(72) Inventeur: JEANNE, Olivier, 87200 Saint-Junien (FR)
(74) Mandataire: Aquinov
(86) Numéro de dépôt international: PCT/FR2012/050060
(87) Numéro de publication internationale: WO 2012/095601

(56) Documents cités:
- DE-A1- 2 605 512

## Description

La présente invention est relative à un joint d'étanchéité semi-ondulé, en élastomère, placé et comprimé dans un logement, tel une gorge, entre deux pièces d'un assemblage à étanchéifier.

Un tel joint permet d'assurer une étanchéité dans de nombreuses applications, mais l'invention vise plus particulièrement la réalisation d'une étanchéité dans un moteur thermique, comme par exemple au niveau du couvercle de culasse.

Par joint en élastomère, l'invention entend un joint réalisé à partir de caoutchouc ou d'un polymère synthétique.

Le coût d'un joint entièrement en élastomère est relativement bas, cependant, les fabricants cherchent toujours à baisser le coût de leurs produits.

Aussi, le coût matière représentant 50% du coût total de fabrication d'un joint entièrement élastomérique, les fabricants cherchent à remplir la fonction étanchéité avec un volume de matière minimal. (voir DE-A-2605512)

Pour donner un ordre d'idées, la section d'un joint selon l'art antérieur se situe aux alentours de 3 millimètres en largeur et de 8 millimètres en hauteur. Toujours selon l'art antérieur, un tel joint présente une section transversale de géométrie fixe et suivant un profil linéaire sur toute la longueur dudit joint. Eventuellement, des formes spécifiques peuvent être ajoutées localement et réparties dans la longueur du joint pour assurer l'étanchéité dans une zone non plane telle qu'une arche de palier par exemple, ou bien pour assurer l'étanchéité avec une troisième pièce de l'assemblage.

Cependant, un tel joint de l'art antérieur reste caractérisé par une section principale de géométrie fixe.

Avec une telle section à géométrie fixe, une diminution de la hauteur du joint entraîne une perte de compression et donc diminue les capacités d'étanchéité du joint.

D'autre part, en cherchant à limiter le volume de matière utilisé dans un joint à section fixe en diminuant la largeur de cette section, ladite diminution entraîne une instabilité et un possible flambage du joint.

Afin de parer aux inconvénients d'une diminution de la hauteur et/ou de la largeur d'un joint à section fixe, d'autres formes spécifiques peuvent être ajoutées localement pour générer un effort de retenue dudit joint dans une gorge et/ou pour conserver une bonne répartition des efforts de compression. Cependant, lesdites formes spécifiques rajoutées ayant généralement une section importante devant celle du joint, le gain de matière obtenu est alors relativement insignifiant.

Aussi, selon un premier objectif, la présente invention vise à pallier les inconvénients de l'art antérieur en proposant une conception d'un joint en élastomère permettant de diminuer le volume de matière utilisé pour la réalisation dudit joint tout en conservant une bonne stabilité du joint et une bonne reprise des efforts de compression, et donc en préservant les capacités d'étanchéité du joint.

Selon un autre objectif, la présente invention propose aussi une conception d'un joint en élastomère permettant d'ajuster localement la résistance à la compression dudit joint.

A cet effet, l'invention a pour objet un joint d'étanchéité en élastomère ayant une longueur suivant un contour et une section transversale de largeur et de hauteur prise dans un plan transversal perpendiculaire à ladite longueur, ledit joint étant caractérisé en ce que la section présente une géométrie continuellement variable dans la longueur du joint.

D'autres caractéristiques et avantages ressortiront de la description qui va suivre de l'invention, description donnée à titre d'exemple uniquement, en regard des dessins annexés sur lesquels :
- la figure 1 représente une vue en perspective d'un tronçon d'un joint semi-ondulé dans une variante de réalisation préférée,
- la figure 2 représente une vue en coupe selon un plan transversal d'un joint semi-ondulé dans une variante de réalisation préférée,
- les figures 3 à 5 représentent des vues en coupe selon un plan transversal de différentes variantes de réalisation des portions ondulées d'un joint semi-ondulé,
- les figures 6 à 10 représentent des vues de dessus dans un plan médian de différentes variantes de réalisation des ondulations des portions ondulées d'un joint semi-ondulé selon l'invention.

La présente invention est relative à un joint d'étanchéité 10 en élastomère.

Par élastomère, l'invention entend un joint réalisé à partir d'un polymère synthétique, de caoutchouc ou de tout autre matériau déformable susceptible d'être comprimé pour réaliser une étanchéité entre deux pièces.

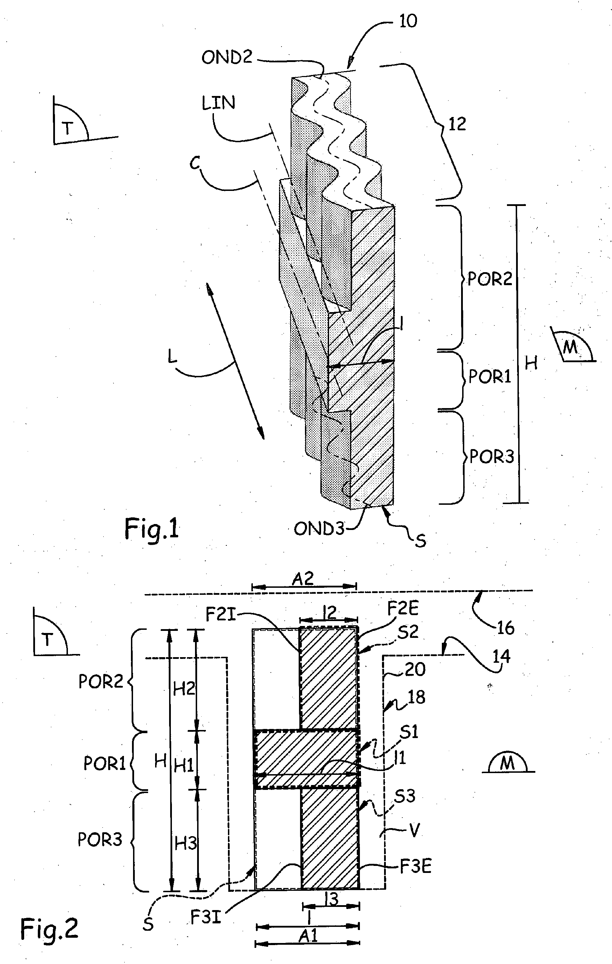

Un tronçon 12 pris dans la longueur L du joint 10, représenté en figure 1 en perspective, illustre la conception semi-ondulée du joint selon l'invention.

L'invention est décrite pour la réalisation d'une étanchéité dans un moteur thermique au niveau du couvercle de culasse, cependant cette application n'est pas limitative et ledit joint semi-ondulé peut permettre d'assurer une étanchéité dans de nombreuses autres applications.

Ainsi, comme illustré en figure 2 en traits pointillés, pour réaliser une étanchéité entre une première pièce 14 tel un couvercle de culasse et une deuxième pièce 16 telle une culasse, le joint semi-ondulé 10 est disposé dans un logement 18 réalisé dans l'une des pièces (14,16).

Ledit logement 18 peut consister en une gorge 20 usinée dans l'une des pièces (14,16), en des épaulements réalisés dans chacune des pièces (14,16), ou en tout autre usinage permettant de dégager un volume V pour la réception du joint semi-ondulé.

Le joint semi-ondulé 10 a une longueur L suivant un contour C et une section S transversale de largeur I et de hauteur H prise dans un plan transversal T pris dans la longueur L du joint et perpendiculaire à ladite longueur L.

De plus, un plan médian M du joint est pris dans la hauteur H du joint et perpendiculaire à ladite hauteur H.

De préférence, le contour C suivi par le joint 10 est continu et fermé de manière à entourer un ou plusieurs conduits internes devant être reliés, ou une ou plusieurs enceintes intérieures devant être fermées, de manière étanche entre les deux pièces (14,16).

Afin d'être comprimé entre les deux pièces (14,16) pour assurer l'étanchéité de l'assemblage, la hauteur H du joint 10 semi-ondulé est supérieure à celle du logement 18 tandis que la largeur I du joint est inférieure à celle du logement 18. Afin de diminuer le volume de matière utilisé pour sa réalisation, la section S du joint semi-ondulé 10 présente une géométrie continuellement variable dans la longueur L du joint, la géométrie de ladite section S changeant donc constamment de forme dans la longueur L du joint.

Plus précisément, au moins une portion (POR2,POR3) prise dans la hauteur H dudit joint présente une section transversale (S2,S3) de largeur (l2,l3) inférieure à la largeur I du joint, et suit un profil non-linéaire dans la longueur L du joint, tandis qu'au moins une portion (POR1) prise dans la hauteur H dudit joint suit un profil linéaire dans la longueur L du joint.

De préférence, le joint 10 comprend dans sa hauteur H :
- une portion linéaire POR1 suivant un profil linéaire LIN dans la longueur L du joint, et,
- au moins une portion ondulée (POR2,POR3) juxtaposée à la première portion POR1 dans ladite hauteur H et suivant un profil (OND2,OND3) ondulé dans la longueur L du joint.

La portion linéaire permet de stabiliser dimensionnellement le joint semi-ondulé dans sa longueur, tandis que la portion ondulée permet d'économiser de la matière, les portions linéaire et ondulée participant conjointement à la fonction d'étanchéité de l'assemblage.

A titre indicatif, cette combinaison entre une portion de section constante et une portion ondulée permet d'économiser environ 30% de matière vis-à-vis d'un joint de section constante tout en permettant de stabiliser correctement le joint dans son logement.

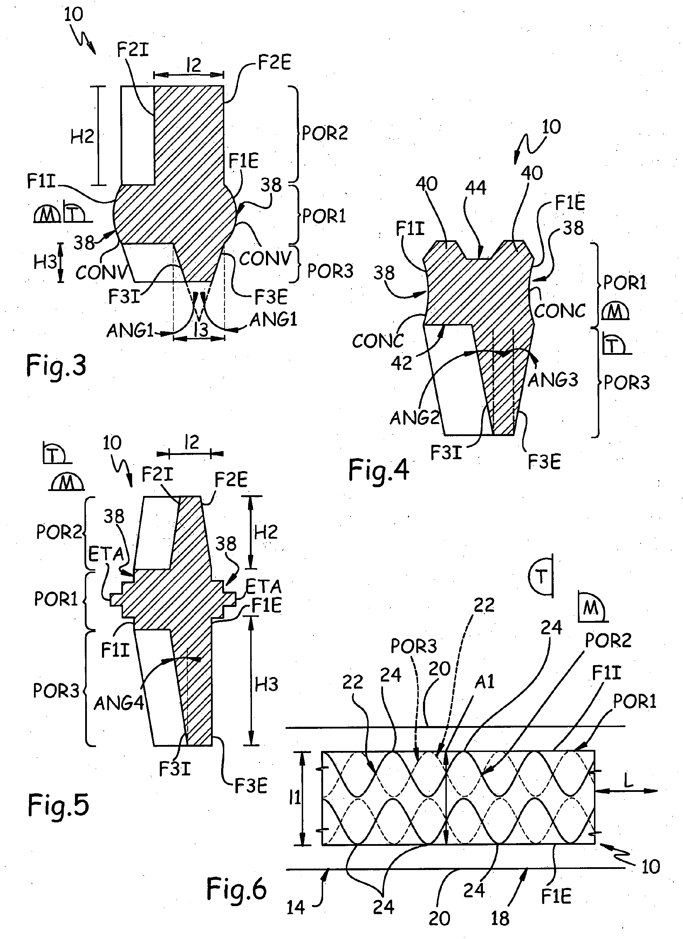

Selon une première variante illustrée en figure 4, le joint comprend une seule portion ondulée POR2 ou POR3 juxtaposée à la première portion POR1 au-dessus ou au-dessous de celle-ci dans la hauteur H du joint.

Selon une deuxième variante préférée de réalisation illustrée sur les figures 1, 2, 3 et 5 et permettant d'économiser au maximum la quantité de matière utilisée, le joint comprend deux portions ondulées POR2 et POR3 situées de part et d'autre de la portion linéaire POR1 dans la hauteur H du joint, chaque portion ondulée (POR2,POR3) suivant un profil ondulé (OND2,OND3) dans la longueur L du joint.

Afin d'offrir une bonne résistance à la compression sans toutefois utiliser trop de matière, la largeur (l2,l3) de la section transversale (S2,S3) de la portion ondulée (POR2,POR3) est au plus égale à 80% de la largeur I1 de la section transversale S1 de la portion linéaire POP1.

A titre indicatif, avec une portion linéaire de largeur I1 égale à 1,8 millimètre, une largeur (l2,l3) de la portion ondulée égale à 1 millimètre permet de conférer au joint une bonne résistance à la compression ainsi qu'une bonne stabilité dans son logement.

Afin d'offrir un bon compromis, la largeur (l2,l3) de la section transversale (S2,S3) de la portion ondulée (POR2,POR3) est de préférence au moins égale à 20 % de la largeur I1 de la section transversale S1 de la portion linéaire POR1.

Aussi, dans la variante préférée de réalisation dans laquelle le joint comprend deux portions ondulées POR2 et POR3 situées de part et d'autre de la portion linéaire POR1 dans la hauteur H du joint, la largeur (l2,l3) de l'une des deux portions ondulées (POR2,POR3) peut être supérieure à la largeur de l'autre portion ondulée, comme cela est représenté en figure 3 et 5.

Toujours dans cette variante préférée de réalisation à deux portions ondulées, la portion ondulée (POR2,POR3) la moins large est de préférence celle qui est placée entièrement dans le logement 18 tandis que la portion ondulée la plus large est montée dépassante du logement 18 avant compression du joint 10.

Afin d'éviter de concentrer les sollicitations aux extrémités de la hauteur du joint lors de sa compression et de les répartir de manière plus homogène dans sa hauteur, la hauteur (H2,H3) de la section transversale (S2,S3) de la portion ondulée (POR2,PQR3) est de préférence au plus égale à 150% de la hauteur H1 de la section transversale S1 de la portion linéaire POR1, la somme des hauteurs (H1,H2,H3) des différentes portions linéaire et ondulée (POR1,POR2,POR3) étant sensiblement égale à la hauteur H du joint. Dans la variante préférée de réalisation dans laquelle le joint comprend deux portions ondulées POR2 et POR3 situées de part et d'autre de la portion linéaire POR1 dans la hauteur H du joint, la hauteur (H2,H3) de l'une des deux portions ondulées (POR2,POR3) peut être supérieure à la hauteur de l'autre portion ondulée, comme cela est représenté en figure 3 et 5.

Toujours dans cette variante préférée de réalisation à deux portions ondulées, la portion ondulée (POR2,POR3) la plus haute est de préférence celle qui est placée entièrement dans le logement 18 tandis que la portion ondulée la moins haute est montée dépassante du logement 18 avant compression du joint 10.

Ensuite, et comme illustré sur les figures 3, 4 et 5, au moins une face latérale (F2I,F2E,F3I,F3E) de la portion ondulée (POR2,POR3) présente un angle de dépouille compris entre O et 15 degrés, ledit angle de dépouille permettant d'améliorer la stabilité du joint dans son logement.

Selon différentes variantes représentées sur les figures 3, 4 et 5, les deux faces latérales (F2I,F2E,F3I,F3E) de la portion ondulée peuvent présenter des angles de dépouille égaux ou différents.

Ainsi, en figure 3, les deux faces (F2I,F2E) de la portion ondulée POR2 présentent toutes deux un angle de dépouille nul tandis que les deux faces (F3I,F3E) de la portion ondulée POR3 présentent toutes deux un angle de dépouille ANG1 non nul.

En figure 4, la première face F3I de la portion ondulée POR3 présente un angle de dépouille ANG2 plus important que l'angle de dépouille ANG3 de l'autre face F3E de ladite portion ondulée POR3.

En figure 5, la première face F3I de la portion ondulée POR3 présente un angle de dépouille ANG4 non nul tandis que l'autre face F3E de ladite, portion ondulée POR3 présente un angle de dépouille nul.

Dans un mode de réalisation préféré, les faces latérales (F2I,F2E,F3I,F3E) de la portion ondulée (POR2,POR3) présentent un angle de dépouille de 3 degrés.

Afin de conserver une bonne stabilité du joint semi-ondulé dans son logement 18 et de fournir une bonne reprise des efforts de compression de manière à préserver les capacités d'étanchéité du joint, et comme illustré sur la figure 6, les ondulations 22 de la portion ondulée (POR2,POR3) ont une amplitude (A1,A2) supérieure ou égale à la largeur l1 de la section transversale S1 de la portion linéaire POR1.

Ainsi, comme représenté en figure 6, les ondulations 22 de la portion ondulée (POR2,POR3) peuvent avoir une amplitude (A1,A2)égale à la largeur I1 de la section transversale S1 de la portion linéaire POR1.

Ainsi, lors de la compression du joint semi-ondulé 10 dans son logement 18, les crêtes 24 desdites ondulations 22 viennent en contact contre les parois du logement 18 simultanément avec les faces latérales (F1I,F1E) de la portion linéaire POR1, la portion ondulée (POR2,POR3) et la portion linéaire POR1 assurant ainsi conjointement la fonction d'étanchéité.

Cependant, des variantes de réalisation desdites ondulations peuvent permettre d'augmenter la résistance à la compression du joint et d'augmenter la participation de la partie ondulée à la fonction d'étanchéité sur toute la longueur du joint ou sur au moins un tronçon pris dans ladite longueur.

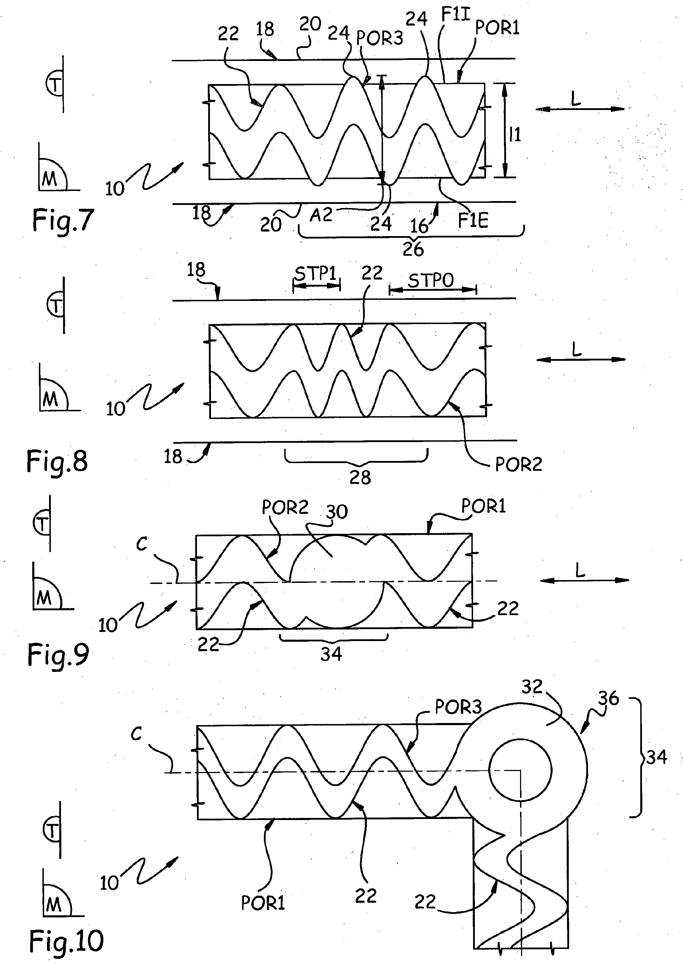

Selon une première variante visant ces objectifs et illustrée en figure 7, les ondulations 22 de la portion ondulée (POR2,POR3) peuvent avoir une amplitude (A1,A2)supérieure à la largeur l1 de la section transversale S1 de la portion linéaire POR1 sur toute la longueur L du joint 10 ou au niveau d'au moins un tronçon 26 pris dans la longueur L du joint.

Dans cette première variante, lors de la compression du joint semi-ondulé 10 dans son logement 18, les crêtes 24 desdites ondulations 22 viennent en contact contre les parois du logement avant les faces latérales (F1I,F1E) de la portion linéaire-POR1.

Ce renforcement de la fonction d'étanchéité remplie par la portion ondulée permet d'adapter les capacités d'étanchéité du joint à certains tronçons du joint par exemple soumis à des pressions de fluide à étancher plus élevées, et donc susceptibles de se déplacer davantage sous l'effet de la pression. Avantageusement, l'augmentation localisée ou non de l'amplitude des ondulations de la portion ondulée située entièrement dans le logement du joint permet aussi d'améliorer le maintien du joint dans ledit logement.

Selon une deuxième variante de réalisation visant les objectifs cités ci-dessus et illustrée en figure 8, le pas STP1 entre deux ondulations 22 de la portion ondulée (POR2,POR3) peut être plus court au niveau d'au moins un tronçon 28 pris dans la longueur L du joint que le pas STPO entre deux ondulations 22 prises en dehors dudit tronçon 28.

Dans une troisième variante de réalisation visant les objectifs précités et illustrée en figure 9 et 10, la portion ondulée (POR2,POR3) intègre au moins un cylindre, plein 30 ou creux 32, inséré entre ses ondulations 22 au niveau d'au moins un tronçon 34 pris dans la longueur L du joint.

Avantageusement, et de manière à améliorer la stabilité du joint 10 dans un coude 36 de son contour C représenté en figure 10, les ondulations 22 de la portion ondulée (POR2,POR3) peuvent intégrer entre elles un cylindre, plein 30 ou creux 32, au niveau dudit coude 36.

Comme illustré sur les figures 6 à 10, le profil ondulé (OND2,OND3) suivi par les ondulations 22 d'une portion ondulée (POR2,POR3) est de préférence sensiblement sinusoïdal.

Toutefois, l'invention couvre aussi des variantes dans lesquelles lesdites ondulations suivent un profil crénelé, triangulaire, ou tout autre profil cheminant d'un côté à l'autre de la largeur I du joint.

Aussi, dans la variante préférée de réalisation à deux portions ondulées, l'invention couvre aussi des variantes dans lesquelles les ondulations 22 de l'une et/ou de l'autre portion ondulée (POR2,POR3) ont une amplitude (A1,A2) supérieure à la largeur I1 de la section transversale S1 de la portion linéaire POR1 sur toute la longueur L du joint 10 ou au niveau d'au moins un tronçon 26 pris dans la longueur L du joint, ou dans lesquelles le pas STP1 entre deux ondulations 22 de l'une et/ou de l'autre portion ondulée (POR2,POR3) est plus court au niveau d'au moins un tronçon 28 pris dans la longueur L du joint que le pas STPO entre deux ondulations 22 prises en dehors dudit tronçon 28, ou dans lesquelles l'une et/ou l'autre portion ondulée (POR2,POR3) intègre au moins un cylindre, plein 30 ou creux 32, inséré entre ses ondulations 22 au niveau d'au moins un tronçon 34 pris dans la longueur L du joint.

Enfin, et comme illustré en traits pointillés sur la figure 6, l'invention couvre aussi une variante de réalisation du joint 10 à deux portions ondulées (POR2,POR3) dans laquelle les ondulations 22 d'une portion ondulée sont déphasées par rapport aux ondulations 22 de l'autre portion ondulée.

De préférence et comme illustré en figure 2, la largeur l1 de la section transversale S1 de la portion linéaire POR1 est sensiblement égale à la largeur l du joint.

Cependant, dans des variantes illustrées sur les figures 3, 4 et 5 et visant à améliorer le procédé de fabrication et/ou la tenue du joint, au moins une face latérale (F1I,F1E) de la portion linéaire POR1 est équipée de moyens de retenue 38.

Selon une première variante illustrée en figure 3, les moyens de retenue 38 prennent la forme d'une surface convexe CONV sensiblement continue sur la longueur L du joint.

Selon une deuxième variante illustrée en figue 4, les moyens de retenue 38 prennent la forme d'une surface concave CONC sensiblement continue sur la longueur L du joint.

Selon une troisième variante illustrée en figure 5, les moyens de retenue 38 prennent la forme d'une surface étagée ETA sensiblement continue sur la longueur L du joint.

Ensuite, et notamment dans la variante de réalisation du joint illustrée en figure 4 et ne comprenant qu'une portion ondulée, la portion linéaire POR1 peut comporter au moins une protubérance 40 de profil constant dans la longueur L du joint au niveau de sa face inférieure 42 et/ou supérieure 44, ladite protubérance formant une nervure d'étanchéité susceptible d'améliorer l'étanchéité réalisée par le joint.

Bien entendu, la présente invention couvre tout assemblage entre deux pièces, notamment une culasse et un couvercle de culasse, étanchéifié à l'aide d'un joint semi-ondulé conforme aux revendications.

## Revendications

1. Joint d'étanchéité (10) en élastomère ayant une longueur (L) suivant un contour (C) et une section (S) transversale de largeur (l) et de hauteur (H) prise dans un plan transversal (T) perpendiculaire à ladite longueur (L), la section (S) présentant une géométrie continuellement variable dans la longueur (L) du joint, le joint d'étanchéité (10) comprenant au moins une portion linéaire (POR1) prise dans la hauteur (H) dudit joint et suivant un profil linéaire (LIN) dans la longueur (L) du joint, et au moins une portion ondulée (POR2,POR3) prise dans la hauteur (H) dudit joint, juxtaposée à la première portion (POR1) dans ladite hauteur (H), présentant une section transversale (S2,S3) de largeur (l2,l3) inférieure à la largeur (l) du joint, et suivant un profil ondulé (OND2,OND3) dans la longueur (L) du joint, le joint d'étanchéité (10) étant **caractérisé en ce que** le pas (STP1) entre deux ondulations (22) de la portion ondulée (POR2,POR3) est plus court au niveau d'au moins un tronçon (28) pris dans la longueur (L) du joint que le pas (STPO) entre deux ondulations (22) prises en dehors dudit tronçon (28).

2. Joint d'étanchéité (10) selon la revendication 1, **caractérisé en ce que** la largeur (12,13) de la section transversale (S2,S3) de la portion ondulée (POR2,POR3) est au plus égale à 80% de la largeur (l1) de la section transversale (S1) de la portion linéaire (POR1).

3. Joint d'étanchéité (10) selon la revendication 1 ou la revendication 2, **caractérisé en ce que** la largeur (l2,l3) de la section transversale (S2,S3) de la portion ondulée (POR2,POR3) est au moins égale à 20% de la largeur (11) de la section transversale (S1) de la portion linéaire (POR1).

4. Joint d'étanchéité (10) selon l'une des revendications 1 à 3, **caractérisé en ce que** la hauteur (H2,H3) de la section transversale (S2,S3) de la portion ondulée (POR2,POR3) est au plus égale à 150% de la hauteur (H1) de la section transversale (S1) de la portion linéaire (POR1).

5. Joint d'étanchéité (10) selon l'une des revendications 1 à 4, **caractérisé en ce qu'**au moins une face latérale (F2I,F2E,F3I,F3E) de la portion ondulée (POR2,POR3) présente un angle de dépouille compris entre O et 15 degrés.

6. Joint d'étanchéité (10) selon l'une des revendications 1 à 5, **caractérisé en ce que** les ondulations (22) de la portion ondulée (POR2,POR3) ont une amplitude (A1,A2) supérieure ou égale à la largeur (l1) de la section transversale (S1) de la portion linéaire (POR1).

7. Joint d'étanchéité (10) selon la revendication 6, **caractérisé en ce que** les ondulations de la portion ondulée (POR2,POR3) ont une amplitude (A1,A2) supérieure à la largeur (I1) de la section transversale (S1) de la portion linéaire (POR1) sur toute la longueur (L) du joint (10) ou au niveau d'au moins un tronçon (26) pris dans la longueur (L) du joint.

8. Joint d'étanchéité (10) selon l'une des revendications 1 à 7, **caractérisé en ce que** la portion ondulée (POR2,POR3) intègre au moins un cylindre, plein (30) ou creux (32), inséré entre ses ondulations (22) au niveau d'au moins un tronçon (34) pris dans la longueur (L) du joint.

9. Joint d'étanchéité (10) selon l'une des revendications 1 à 8, **caractérisé en ce que** le profil ondulé (OND2,OND3) suivi par les ondulations (22) d'une portion ondulée (POR2,POR3) est sensiblement sinusoïdal.

10. Joint d'étanchéité (10) selon l'une des revendications 1 à 9, **caractérisé en ce que** ledit joint suit un contour (C) continu et fermé.

11. Joint d'étanchéité (10) selon l'une des revendications 1 à 10, **caractérisé en ce qu'**au moins une face latérale (F1I,F1E) de la portion linéaire (POR1) est équipée de moyens de retenue (38).

12. Joint d'étanchéité (10) selon la revendication 11, **caractérisé en ce que** les moyens de retenue (38) prennent la forme d'une surface étagée (ETA), concave (CONC) ou convexe (CONV).

13. Joint d'étanchéité (10) selon l'une des revendications 1 à 12, **caractérisé en ce que** la portion linéaire (POR1) comporte au moins une protubérance (40) de profil constant dans la longueur (L) du joint au niveau de sa face inférieure (42) et/ou supérieure (44).

14. Joint d'étanchéité (10) selon l'une des revendications 1 à 13, **caractérisé en ce qu'**il comprend deux portions ondulées (POR2) et (POR3) situées de part et d'autre de la portion linéaire (POR1) dans la hauteur (H) du joint, chaque portion ondulée (POR2,POR3) suivant un profil ondulé (OND2 ,OND3) dans la longueur (L) du joint.

15. Joint d'étanchéité (10) selon la revendication 14, **caractérisé en ce que** la hauteur (H2,H3), et/ou la largeur (l2,l3), de l'une des deux portions ondulées (POR2,POR3) est supérieure à la hauteur, et/ou la largeur (l2,l3), de l'autre portion ondulée.

16. Joint d'étanchéité (10) selon la revendication 14 ou 15, **caractérisé en ce que** les ondulations (22) d'une portion ondulée sont déphasées par rapport aux ondulations (22) de l'autre portion ondulée

## Patentansprüche

1. Dichtung (10) aus Elastomer mit einer Länge (L) entlang einem Umriss (C) und einem Querschnitt (S) der Breite (I) und der Höhe (H), die in einer im rechten Winkel zur Länge (L) ausgerichteten Querebene (T) gemessen sind, wobei der Querschnitt (S) entlang der Länge (L) der Dichtung eine kontinuierlich veränderliche Geometrie aufweist und wobei die Dichtung (10) entlang der Höhe (H) der Dichtung einen linearen Abschnitt (POR1), der in Richtung der Länge (L) der Dichtung einem linearen Profil (LIN) folgt, und entlang der Höhe (H) der Dichtung wenigstens einen gewellten Abschnitt (POR2, POR3) aufweist, der entlang der Höhe (H) neben dem ersten Abschnitt (POR1) angeordnet ist und der über einen Querschnitt (S2, S3) der Breite (I2, I3) verfügt, die kleiner als die Breite (I) der Dichtung ist, und der in Richtung der Länge (L) der Dichtung einem gewellten Profil (OND2, OND3) folgt, wobei die Dichtung (10) **dadurch gekennzeichnet ist, dass** der Abstand (STP1) zwischen zwei Wellen (22) des gewellten Abschnitts (POR2, POR3) im Bereich wenigstens eines Teilabschnitts (28) entlang der Länge (L) der Dichtung kürzer als der Abstand (STPO) zwischen zwei Wellen (22) außerhalb des Teilabschnitts (28) ist.

2. Dichtung (10) nach Anspruch 1, **dadurch gekennzeichnet, dass** die Breite (I2, I3) des Querschnitts (S2, S3) des gewellten Abschnitts (POR2, POR3) zu wenigstens 80% gleich der Breite (I1) des Querschnitts (S1) des linearen Abschnitts (POR1) ist.

3. Dichtung (10) nach Anspruch 1 oder Anspruch 2, **dadurch gekennzeichnet, dass** die Breite (I2, I3) des Querschnitts (S2, S3) des gewellten Abschnitts (POR2, POR3) zu wenigstens gleich 20% der Breite (I1) des Querschnitts (S1) des linearen Abschnitts (POR1) ist.

4. Dichtung (10) nach einem der Ansprüche 1 bis 3, **dadurch gekennzeichnet, dass** die Höhe (H2, H3) des Querschnitts (S2, S3) des gewellten Abschnitts (POR2, POR3) zu wenigstens 150% gleich der Höhe (H1) des Querschnitts (S1) des linearen Abschnitts (POR1) ist.

5. Dichtung (10) nach einem der Ansprüche 1 bis 4, **dadurch gekennzeichnet, dass** wenigstens eine Seitenfläche (F2I, F2E, F3I, F3E) des gewellten Abschnitts (POR2, POR3) einen Verjüngungswinkel zwischen 0 und 15 Grad zeigt.

6. Dichtung (10) nach einem der Ansprüche 1 bis 5, **dadurch gekennzeichnet, dass** die Wellen (22) des gewellten Abschnitts (POR2, POR3) eine Amplitude (A1, A2) größer gleich der Breite (I1) des Querschnitts (S1) des linearen Abschnitts (POR1) haben.

7. Dichtung (10) nach Anspruch 6, **dadurch gekennzeichnet, dass** die Wellen des gewellten Abschnitts (POR2, POR3) eine Amplitude (A1, A2) größer der Breite (I1) des Querschnitts (S1) des linearen Abschnitts (POR1) über die gesamte Länge (L) der Dichtung (10) oder im Bereich wenigstens eines Teilabschnitts (26) entlang der Länge (L) der Dichtung haben.

8. Dichtung (10) nach einem der Ansprüche 1 bis 7, **dadurch gekennzeichnet, dass** der gewellte Abschnitt (POR2, POR3) wenigstens einen Zylinder, massiv (30) oder hohl (32), einschließt, der in seine Wellen (22) im Bereich wenigstens eines Teilabschnitts (34) entlang der Länge (L) der Dichtung eingefügt ist.

9. Dichtung (10) nach einem der Ansprüche 1 bis 8, **dadurch gekennzeichnet, dass** das gewellte Profil (OND2, OND3) dem die Wellen (22) eines gewellten Abschnitts (POR2, POR3) folgen, im Wesentlichen sinusförmig ist.

10. Dichtung (10) nach einem der Ansprüche 1 bis 9, **dadurch gekennzeichnet, dass** die Dichtung einem kontinuierlichen und geschlossenen Umriss (C) folgt.

11. Dichtung (10) nach einem der Ansprüche 1 bis 10, **dadurch gekennzeichnet, dass** wenigstens eine Seitenfläche (F1I, F1E) des linearen Abschnitts (POR1) mit Haltemitteln (38) versehen ist.

12. Dichtung (10) nach Anspruch 11, **dadurch gekennzeichnet, dass** die Haltemittel (38) als eine konkave (CONC), konvexe (CONV) oder abgestufte (ETA) Oberfläche ausgestaltet sind.

13. Dichtung (10) nach einem der Ansprüche 1 bis 12, **dadurch gekennzeichnet, dass** der lineare Abschnitt (POR1) im Bereich seiner unteren Seite (42) und/oder oberen Seite (44) wenigstens einen Vorsprung (40) mit konstantem Profil entlang der Länge (L) der Dichtung aufweist.

14. Dichtung (10) nach einem der Ansprüche 1 bis 13, **dadurch gekennzeichnet, dass** diese zwei gewellte Abschnitte (POR2) und (POR3) aufweist, die entlang der Höhe (H) der Dichtung beidseits des linearen Abschnitts (POR1) angeordnet sind, wobei jeder gewellte Abschnitt (POR2, POR3) in Richtung der Länge (L) der Dichtung einem gewellten Profil (OND2, OND3) folgt.

15. Dichtung (10) nach Anspruch 14, **dadurch gekennzeichnet, dass** die Höhe (H2, H3) und/oder die Breite (I2, I3) von einem der beiden gewellten Abschnitte (POR2, POR3) größer als die Höhe und/oder die Breite (I2, I3) des anderen gewellten Abschnitts ist.

16. Dichtung (10) nach Anspruch 14 oder 15, **dadurch gekennzeichnet, dass** die Wellen (22) eines gewellten Abschnitts bezüglich der Wellen (22) des anderen gewellten Abschnitts in der Phase versetzt sind.

## Claims

1. An elastomer gasket (10) having a length (L) along a contour (C) and a cross section (S) with a width (1) and height (H) taken in a transverse plane (T) perpendicular to said length (L), the cross section (S) having a continuously variable geometry in the length (L) of the gasket, the gasket (10) comprising at least one linear portion (POR1) taken in the height (H) of said gasket and along a linear profile (LIN) in the length (L) of the gasket, and at least one corrugated portion (POR2, POR3) taken in the height (H) of said gasket, juxtaposed with the first portion (POR1) in said height (H), having a cross section (S2, S3) with a width (l2, l3) less than the width (1) of the gasket, and in a corrugated profile (OND2, OND3) in the length (L) of the gasket, the gasket (10) being **characterised in that** the step (STP1) between two corrugations (22) of the corrugated portion (POR2, POR3) is shorter at at least one portion (28) taken in the length (L) of the gasket than the step (STPO) between two corrugations (22) outside said portion (28).

2. A gasket (10) according to claim 1, **characterised in that** the width (l2, l3) of the cross section (S2, S3) of the corrugated portion (POR2, POR3) is no more than 80% of the width (11) of the cross section (S1) of the linear portion (POR1).

3. A gasket (10) according to claim 1 or claim 2, **characterised in that** the width (l2, l3) of the cross section (S2, S3) of the corrugated portion (POR2, POR3) is at least 20% of the width (11) of the cross section (S1) of the linear portion (POR1).

4. A gasket (10) according to one of claims 1 to 3, **characterised in that** the height (H2, H3) of the cross section (S2, S3) of the corrugated portion (POR2, POR3) is no more than 150% of the height (H1) of the cross section (S1) of the linear portion (POR1).

5. A gasket (10) according to one of claims 1 to 4, **characterised in that** at least one lateral face (F2I, F2E, F3I, F3E) of the corrugated portion (POR2, POR3) has a relief angle of between 0 and 15 degrees.

6. A gasket (10) according to one of claims 1 to 5, **characterised in that** the corrugations (22) of the corrugated portion (POR2, POR3) have an amplitude (A1, A2) greater than or equal to the width (11) of the cross section (S1) of the linear portion (POR1).

7. A gasket (10) according to claim 6, **characterised in that** the corrugations of the corrugated portion (POR2, POR3) have an amplitude (A1, A2) greater than the width (11) of the cross section (S1) of the linear portion (POR1) over the entire length (L) of the gasket (10) or at at least one portion (26) taken in the length (L) of the gasket.

8. A gasket (10) according to one of claims 1 to 7, **characterised in that** the corrugated portion (POR2, POR3) includes at least one cylinder, solid (30) or hollow (32), inserted between its corrugations (22) at at least one portion (34) taken in the length (L) of the gasket.

9. A gasket (10) according to one of claims 1 to 8, **characterised in that** the corrugated profile (OND2, OND3) followed by the corrugations (22) of a corrugated portion (POR2, POR3) is substantially sinusoidal.

10. A gasket (10) according to one of claims 1 to 9, **characterised in that** said gasket follows a continuous closed contour (C).

11. A gasket (10) according to one of claims 1 to 10, **characterised in that** at least one lateral face (F1I, F1E) of the linear portion (POR1) is equipped with retaining means (38).

12. A gasket (10) according to claim 11, **characterised in that** the retaining means (38) takes the form of a stepped surface (ETA), concave (CONC) or convex (CONV).

13. A gasket (10) according to one of claims 1 to 12, **characterised in that** the linear portion (POR1) comprises at least one protuberance (40) with a constant profile in the length (L) of the gasket at its bottom (42) and/or top (44) face.

14. A gasket (10) according to one of claims 1 to 13, **characterised in that** it comprises two corrugated portions (POR2) and (POR3) situated on either side of the linear portion (POR1) in the height (H) of the gasket, each corrugated portion (POR2, POR3) following a corrugated profile (OND2, OND3) in the length (L) of the gasket.

15. A gasket (10) according to claim 14, **characterised in that** the height (H2, H3), and/or the width (l2, l3), of one of the two corrugated portions (POR2, POR3) is greater than the height, and/or the width (l2, l3), of the other corrugated portion.

16. A gasket (10) according to claim 14 or 15, **characterised in that** the corrugations (22) of one corrugated portion are out of phase with respect to the corrugations (22) of the other corrugated portion.
